(19) Europäisches Patentamt
European Patent Office
Office européen des brevets

(11) **EP 2 318 632 B1**

(12) **EUROPÄISCHE PATENTSCHRIFT**

(45) Veröffentlichungstag und Bekanntmachung des Hinweises auf die Patenterteilung:
**29.05.2013 Patentblatt 2013/22**

(21) Anmeldenummer: **09775610.0**

(22) Anmeldetag: **25.08.2009**

(51) Int Cl.:
*E05F 5/00* (2006.01)          *F16F 7/01* (2006.01)
*F16F 9/00* (2006.01)

(86) Internationale Anmeldenummer:
**PCT/AT2009/000328**

(87) Internationale Veröffentlichungsnummer:
**WO 2010/022424 (04.03.2010 Gazette 2010/09)**

(54) **DÄMPFER FÜR RELATIV ZUEINANDER BEWEGBARE MÖBELTEILE UND/ODER MÖBELBESCHLAGTEILE EINES MÖBELBESCHLAGES**

DAMPER FOR PARTS OF A FURNITURE FITTING AND/OR FURNITURE PARTS WHICH CAN BE MOVED RELATIVE TO ONE ANOTHER

AMORTISSEUR POUR DES ÉLÉMENTS DE MEUBLE ET/OU DES ÉLÉMENTS D'UNE FERRURE DE MEUBLE MOBILES LES UNS PAR RAPPORT AUX AUTRES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.08.2008 AT 13282008**

(43) Veröffentlichungstag der Anmeldung:
**11.05.2011 Patentblatt 2011/19**

(73) Patentinhaber: **Julius Blum GmbH**
**6973 Höchst (AT)**

(72) Erfinder: **KRAMMER, Bernhard**
**A-6973 Höchst (AT)**

(74) Vertreter: **Torggler, Paul Norbert et al**
**Patentanwälte Torggler & Hofinger**
**Wilhelm-Greil-Strasse 16**
**Postfach 556**
**6021 Innsbruck (AT)**

(56) Entgegenhaltungen:
**EP-A2- 1 447 588     WO-A1-2008/083417**
**AT-B- 40 052     US-A- 1 114 691**

**EP 2 318 632 B1**

**Beschreibung**

Die vorliegende Erfindung bezieht sich auf einen Möbelbeschlag mit einem Dämpfer, wobei der Dämpfer einen Raum zur Aufnahme eines Dämpfungsmediums aufweist.

Bei Dämpfungsmedien gemäß dem Stand der Technik - wie z.B. bei niedrigviskosen Silikonölen - besteht die erhebliche Gefahr, dass diese Dämpfungsmedien aufgrund ihrer relativ dünnflüssigen Konsistenz aus dem Dämpfergehäuse auslaufen und neben einer Funktionsuntüchtigkeit des Dämpfers auch massive Schäden durch austretendes Öl verursachen können. Außerdem ist die Verwendung von niedrigviskosen Dämpfmedien insofern problematisch, das diese in kleinen Räumen (insbesondere in Scherspalten mit geringer Füllmenge) oftmals nur eine unzureichende Dämpfleistung generieren können. Werden anstelle von niedrigviskosen Dämpfungsmedien Medien mit hoher Viskosität eingesetzt, so ergibt sich dadurch auch die Problematik, dass sich ein dem Dämpfer zugeordnetes Betätigungselement aufgrund der hohen Viskosität des Dämpfungsmediums nur schwer bewegen bzw. rückstellen lässt. Somit ist bei Verwendung hochviskoser Dämpfungsmedien nicht immer ein vorbildlicher Dämpfungsverlauf sichergestellt, da das bewegbare Möbelteil durch die generierte Dämpfungskraft nur sehr langsam oder überhaupt nicht bewegbar ist. Darüber hinaus hat sich herausgestellt, dass die Dämpfungscharakteristik hochviskoser Dämpfungsmedien häufig stark temperaturabhängig ist, sodass der Dämpfer bei unterschiedlichen Umgebungstemperaturen auch unterschiedlich dämpft.

Ein gattungsgemäßer Dämpfer ist in der WO 2008/083417 A1 der Anmelderin beschrieben. Als Dämpfungsmedium können Silikonöle und insbesondere auch dilatante Medium bzw. Fluide eingesetzt werden, deren Zähigkeit mit steigender Schergeschwindigkeit zunimmt.

Nicht-gattungsgemäße Dämpfer sind beispielsweise in der AT 40052 und in der US 1,114,691 beschrieben. Bei diesen Dämpfern handelt es sich jeweils um Stoßdämpfer für Fahrzeuge mit einem in einem Gehäuse verdrehbaren Flügel, der vollständig in einer Reibungsmasse eingetaucht ist. Als Reibungsmasse können Mischungen von Bergkreide und Wasser sowie plastische Tonmassen eingesetzt werden. Der drehbare Flügel muss sich dabei - ähnlich einem Mixer - den Weg durch die Widerstandsmasse bahnen, wobei eine zur Dämpfung der Wagenfederschwingungen gleichmäßige Reibung erzeugt wird. Bei diesen Dämpfern muss eine große Menge an Dämpfmedium bewegt werden, um die bei einem Stoßdämpfer auftretenden hohen Kräfte abzufangen. Der erforderliche Bauraum solcher Dämpfer ist daher auch entsprechend groß. Der zwischen dem freien Ende des drehbaren Flügels und der Innenwandung des Gehäuses verbleibende Abstand muss relativ groß sein, um zu verhindern, dass sich die Reibungsmasse als Ganzes mit dem Flügel mitbewegt. Zu diesem Zweck ist außerdem vorgesehen, die Innenwandung aufzurauen.

Aufgabe der vorliegenden Erfindung ist es, einen gattungsgemäßen Dämpfer unter Vermeidung oben genannter Nachteile anzugeben.

Dies wird erfindungsgemäß in einer vorteilhaften Ausgestaltung dadurch erreicht, dass der Raum im Wesentlichen vollständig mit einer Vielzahl von Festkörperteilchen gefüllt ist, wobei die zwischen den Festkörperteilchen verbleibenden Zwischenräume im Wesentlichen vollständig von einer Flüssigkeit ausgefüllt sind.

Das dadurch gebildete Dämpfungsmedium befindet sich im Ruhezustand - bei Raumtemperatur sowie ohne Druckbeaufschlagung - in einem nahezu pastösen Zustand, sodass insgesamt eine im Wesentlichen nicht-fließfähige Masse vorliegt. Die Fließfähigkeit wird durch Temperaturerhöhung und/oder Druckbeaufschlagung herbeigeführt. Das Dämpfungsmedium wird daher zweckmäßigerweise beim Befüllen des Dämpfers erwärmt, sodass der Füllvorgang problemlos möglich ist. Während des Dämpfungsvorganges hingegen wirken auf das Dämpfungsmedium Scherkräfte, welche die erforderliche Fließfähigkeit und somit eine Dämpfungswirkung hervorrufen. Die Dämpfwirkung wird primär durch Festkörperreibung herbeigeführt, wobei die in relativ geringer Konzentration vorkommende Flüssigkeit zur Momentenübertragung zwischen den sich bewegenden Festkörperteilchen vorgesehen ist. Auf diese Weise können Dämpfer realisiert werden, bei denen die Gefahr eines Auslaufens des Dämpfungsmediums weitgehend reduziert ist. Dies verringert somit auch die beim Stand der Technik häufig vorkommenden Dichtungsprobleme bei Verwendung relativ dünnflüssiger Dämpfungsmedien. Darüber hinaus kann durch die vorgesehene Festkörperreibung ein Dämpfer realisiert werden, der in einem für den Einsatzzweck üblicherweise vorgesehenen Temperaturbereich (z.B. zwischen 0°C und 40°C) ein weitgehend homogenes Dämpfungsverhalten gewährleistet.

Das Dämpfungsmedium gemäß dem Aspekt der vorliegenden Erfindung wird also dadurch wirksam, dass die Festkörperteilchen bzw. Festkörperpartikel über Reibungswirkung wechselwirken. Anders als bei einer Suspension ist es also nicht ausreichend, den Raum nur teilweise mit Festkörperteilchen auszufüllen. Gemäß der Erfindung werden die Festkörperteilchen im Wesentlichen packungsdicht angeordnet, sodass sich die Oberflächen der Festkörperteilchen berühren. Die zwischen den packungsdicht angeordneten Festkörperteilchen verbleibenden Zwischenräume werden mit der Flüssigkeit ausgefüllt.

Weitere vorteilhafte Ausgestaltungen der Erfindung sind in den abhängigen Ansprüchen definiert.

Die hierbei verwendete Flüssigkeit sollte zur Erzielung günstiger Ergebnisse relativ dickflüssig (z.B. mit einer kinematischen Viskosität von 37,5 mm$^2$/s bei 40°C), weitgehend temperaturbeständig (zumindest innerhalb eines Temperaturbereiches zwischen 0°C und 40°C) und eine relativ hohe Scherstabilität (z.B: 0% nach ASTM D 2603) aufweisen. Die Scherstabilität der Flüssigkeit beschreibt deren Widerstand gegen permanenten Viskositätsverlust durch das "Scheren" langkettiger Polymere. Insbesondere bei hoher mechanischer Belastung in engen Räumen kann die Flüssigkeit einen unerwünschten Viskositätsverlust erleiden.

Die Viskosität der Flüssigkeit ist im Allgemeinen von der Temperatur abhängig. Wenn die Temperatur der Flüssigkeit erhöht wird, so nimmt deren Viskosität im Allgemeinen ab, bei Verringerung der Temperatur nimmt die Viskosität der Flüssigkeit im Allgemeinen zu. In diesem Zusammenhang wird häufig der Ausdruck "Viskositätsindex" (abgekürzt VI) verwendet. Der Viskositätsindex ist eine dimensionslose Zahl, die den Grad der Veränderung der Viskosität innerhalb eines vorgegebenen Temperaturbereiches anzeigt. Ein hoher VI kennzeichnet somit eine Flüssigkeit, die eine relativ kleine Veränderung der Viskosität mit der Temperatur aufzeigt. Günstigerweise kann vorgesehen sein, dass die Flüssigkeit einen Viskositätsindex von mindestens 150, vorzugsweise zwischen 200 und 350, aufweist. Auch kann die Flüssigkeit durch einen VI größer als 350 gekennzeichnet sein.

Bei einer bevorzugten Ausführungsform ist die verwendete Flüssigkeit ein Polymer, vorzugsweise ein Ethylen-α-Olefin-Copolymer, wobei der Ethylengehalt im Bereich von etwa 40 Mol-% bis etwa 85 Mol-%, vorzugsweise zwischen 45 Mol-% bis etwa 55 Mol-% liegt. Als Beispiel für ein solches Copolymer sei lucant® HC-600 bzw. Lucant® HC-2000 der Firma Mitsui Chemicals Co., Ltd. genannt, die hierfür geeignete Öle auf Kohlenwasserstoffbasis darstellen. Diese Öle weisen eine gute Beständigkeit hinsichtlich Temperaturfluktuationen auf, wobei deren Viskosität in einem für den Einsatzzweck üblichen Temperaturbereich weitgehend stabil ist. Diese transparenten Öle sind auch chemisch stabil, wodurch die Gefahr einer Metallkorrosion weitgehend reduziert ist.

In der folgenden Tabelle werden einige Eigenschaften des Lucant® HC-2000 der Firma Mitsui Chemicals Co., Ltd. visualisiert:

| Eigenschaft | Einheit | Testmethode | Prüfbedingung | HC 2000 |
|---|---|---|---|---|
| Aussehen | - | - | visuell | transparent |
| Relative Dichte | - | Anton Paar Dichtemessung | $d^{20}_4$ | 0.850 |
| Kinematische Viskosität | $mm^2/s$ | JIS K 2283 | 40°C | 37,500 |
| Viskositätsindex | - | JIS K 2283 | | 300 |
| Viskosität (Brookfield) | mPas ($x10^4$) | ASTM D 2983 | 0°C | 200 |
| Stockpunkt | °C | JIS K 2269 | | -5.0 |
| Scherstabilität | % | ASTM D 2603 | Zirkulieren kalten Wassers, 40°C, 10KC, 100W (30min.) | 0 |

Angemerkt sei, dass obige Angaben des Lucant® HC-2000 nur ein mögliches Ausführungsbeispiel der Erfindung darstellen können. Die verwendete Flüssigkeit zum Ausfüllen der zwischen den Festkörperteilchen verbleibenden Zwischenräume kann auch von einer alternativen Flüssigkeit gebildet sein, deren Eigenschaften von den Angaben gemäß obiger Tabelle abweichen können.

Gemäß einer bevorzugten Ausführungsform der Erfindung ist vorgesehen, dass die Festkörperteilchen im Wesentlichen kugelförmig ausgebildet sind. In diesem Zusammenhang wird häufig der Begriff "Formfaktor" benutzt, der ein Maß für die Form eines unregelmäßig geformten Partikels kennzeichnet. Besonders günstig ist die Erfindung umsetzbar, wenn die als Festkörperteilchen verwendeten Kugeln einen Formfaktor zwischen 0,5 und 1, vorzugsweise im Wesentlichen 1, aufweisen. Zur Ermittlung des Formfaktors kann die "Sphärizität nach Wadell" herangezogen werden, wonach die Sphärizität der Festkörperteilchen als Verhältnis von Oberfläche einer volumengleichen Kugel zur tatsächlichen Oberfläche definiert ist:

$$F = \frac{\textit{Oberfläche der volumengleichen Kugel}}{\textit{tatsächliche Oberfläche}}$$

Da die Kugel von allen Körpern gleichen Volumens die kleinste Oberfläche aufweist, nimmt der Nenner in der Sphärizität für alle Nicht-Kugeln einen größeren Wert an als der Zähler und daher ist der Formfaktor F kleiner gleich 1, wobei ein Formfaktor gleich 1 nur für Kugeln gilt. Als zweidimensionales Analogon zur Sphärizität wird z.B. bei einer Bildauswertung die Zirkularität definiert:

$$\textit{Zirkularität} = \frac{\textit{Umfang des projektionsflächengleichen Kreises}}{\textit{tatsächlicher Umfang der Partikelprojetion}}$$

Auch die Zirkularität nimmt Werte kleiner gleich 1 an, weil der Umfang aller Nicht-Kreisflächen größer ist als der des flächengleichen Kreises.

Gemäß einem Ausführungsbeispiel der Erfindung kann vorgesehen sein, dass der Anteil der Festkörperteilchen relativ zum Anteil der Flüssigkeit zwischen 75 Gew.-% und 98 Gew.-%, vorzugsweise zwischen 80 Gew.-% und 95 Gew.-%, liegt.

Gemäß einem möglichen Ausführungsbeispiel kann vorgesehen sein, dass die Festkörperteilchen einen Durchmesser zwischen 0,2 $\mu$m und 100 $\mu$m aufweisen. Besonders günstig hat sich jedoch eine vorgegebene Komgrößenverteilung der Festkörperteilchen herausgestellt, wobei beispielhaft vorgesehen werden kann, dass etwa 80% der Festkörperteilchen eine maximale Größe von 100 $\mu$m und etwa 20% der Festkörperteilchen eine maximale Größe von 30 $\mu$m aufweisen. Auf diese Weise kann besonders leicht eine dichte Kugelpackung bereitgestellt werden, sodass die zwischen den Festkörperteilchen verbleibenden Zwischenräume sehr klein ausfallen. Es kann auch vorgesehen werden, dass - bei Verwendung nichtmetallischer Partikel - etwa 50% der Festkörperteilchen einen Durchmesser zwischen 10 $\mu$m und 100 $\mu$m aufweisen. Bei Verwendung metallischer Festkörperteilchen kann der Durchmesser auch geringer dimensioniert werden.

Gemäß einem Ausführungsbeispiel der Erfindung kann vorgesehen sein, dass die Festkörperteilchen durch Teilchen aus unterschiedlichem Material gebildet sind. Hierbei können Festkörperteilchen aus Keramikmaterial, Glas, Metall und/oder Kreide verwendet werden. Bei Verwendung von Kreide kann es günstig sein, wenn die Kreidekörner einen Durchmesser aufweisen, der kleiner als 3 $\mu$m ist. Darüber hinaus sind auch Festkörperteilchen aus Kunststoffgranulat, Steinmehl, Korund und/oder Edel- bzw. Halbedelsteine (beispielsweise Smaragde, Rubine, Saphire) vorteilhaft einsetzbar.

Zur Herstellung des Dämpfungsmediums kann in eine vorab gewichtsmäßig ermittelte Menge der Flüssigkeit die ebenfalls gewichtsmäßig ermittelte Menge an Festkörperteilchen durch Einmischen zugeführt werden. Eine mögliche Kontrolle der Zusammensetzung kann dahingehend erfolgen, dass der Durchmesser der enthaltenen Festkörperteilchen sowie deren vorkommende Häufigkeit mithilfe eines Rasterelektronenmikroskops (REM) festgestellt werden. Hierbei kann es günstig sein, zuvor die Festkörperteilchen und die Flüssigkeit mithilfe eines Zentrifugalverfahrens zu trennen.

Zur Ausführung der Erfindung kann es günstig sein, wenn dass der Raum zwischen zwei bei einem Dämpfungshub relativ zueinander bewegbaren Dämpfungsbauteilen angeordnet ist. Gemäß einem Ausführungsbeispiel ist vorgesehen, dass die Dämpfungsbauteile relativ zueinander verdrehbar angeordnet sind. Die Erfindung ist somit also besonders günstig in Dämpfern umsetzbar, bei denen mindestens eines der beiden Dämpfungsbauteile während des Dämpfungshubes - vorzugsweise ausschließlich - eine Drehbewegung relativ zum anderen Dämpfungsbauteil ausführt. Solche Dämpfer werden häufig auch als Rotationsdämpfer bezeichnet.

Gemäß einem bevorzugten Ausführungsbeispiel kann vorgesehen sein, dass ein drehbarer Dämpfungsbauteil im Wesentlichen radförmig ausgebildet ist. Der das Dämpfungsmedium aufnehmende Raum kann dabei zwischen einer peripheren Umfangsfläche des drehbaren Dämpfungsbauteiles und einer inneren Fläche des stationären Dämpfungsbauteiles gebildet sein. Der radförmige drehbare Dämpfungsbauteil reicht dabei unter Ausbildung des das Dämpfungsmedium aufnehmenden Raumes bis fast an den stationären Dämpfungsbauteil heran. In diesem Zusammenhang kann es zweckmäßig sein, wenn der Raum als im Wesentlichen umlaufender, ringförmiger Scherspalt ausgebildet ist.

In einem weiteren Ausführungsbeispiel der Erfindung kann vorgesehen sein, dass eine oder auch beide Dämpfungsbauteile makroskopische Oberflächenelemente zur Vergrößerung ihrer für den Kontakt mit dem Dämpfungsmedium vorgesehenen Oberfläche(n) aufweist (aufweisen). Die Oberflächenelemente können Noppen, Rillen, Spitzen, Zähne, Vertiefungen, Erhebungen oder eine aufgeraute Oberflächenstruktur aufweisen. Umfangreiche Versuche der Anmelderin haben gezeigt, dass es vorteilhaft ist, wenn die Oberflächenelemente am Umfangsrand eines drehbaren Dämpfungsbauteiles angeordnet sind, wobei der relative Winkelabstand zweier benachbarter Oberflächenelemente - bezogen auf die Drehachse des Dämpfungsbauteiles - zwischen 5° und 20°, vorzugsweise zwischen 8° und 15°, liegt.

Der Möbelbeschlag kann im einfachsten Fall als ein Befestigungselement zur Lagerung des Dämpfers ausgebildet sein. Darüber hinaus kann der Möbelbeschlag als Möbelscharnier, als Ausziehführung für Schubladen oder auch als Stellmechanismus zum Bewegen einer Möbelklappe ausgeführt werden. Der erfindungsgemäße Dämpfer kann hierbei so angeordnet werden, dass er eine Relativbewegung - insbesondere eine Linearbewegung und/oder eine Verschwenkbewegung - von mindestens zwei an einem Möbelteil zu befestigenden Anschlagteilen dämpft. Bei Möbelscharnieren kann hierbei die Relativbewegung von Scharniertopf zu Scharnierarm, bei einer Ausziehführung für Schubladen die Relativbewegung zweier Schienen und bei einem Stellmechanismus die Schwenkbewegung eines zum Bewegen der Möbelklappe vorgesehenen Stellarmes gedämpft werden. Aus Gründen der Einfachheit wird in den angehängten Figuren die Anordnung eines Dämpfers an einem Möbelscharnier gezeigt. Für den zuständigen Fachmann ist es anhand der gezeigten Ausführungsbeispiele unmittelbar einsichtig, wie die Anordnung des Dämpfers an einer Schubladenausziehführung oder an einem Stellmechanismus zum Bewegen einer Möbelklappe zu erfolgen hat. Falls eine translatorische Bewegung eines Möbelteiles bzw. eines Möbelbeschlages gedämpft werden sollte, so kann diese translatorische Bewegung über geeignete Übertragungsmittel (z.B. über eine Zahnstange und ein mit dieser kämmendes Ritzel) auf einen als Rotationsdämpfer ausgeführten erfindungsgemäßen Dämpfer übertragen werden.

Weitere Einzelheiten und Vorteile der vorliegenden Erfindung werden anhand der nachfolgenden Figurenbeschreibung erläutert. Dabei zeigt bzw. zeigen:

| | |
|---|---|
| Fig. 1 | eine stark schematisierte Darstellung eines zur Aufnahme eines Dämpfungsmediums vorgesehenen Raumes eines Möbeldämpfers mit einem darin angeordneten Dämpfungsmedium, |
| Fig. 2a, 2b | zwei unterschiedliche Histogramme, welche verschiedene Korngrößenverteilungen der Festkörperteilchen veranschaulichen, |
| Fig. 3 | eine perspektivische Darstellung eines gedämpften Möbelscharniers in Montagestellung, |
| Fig. 4a, 4b | den Scharniertopf im zusammengebauten Zustand sowie eine Explosionsdarstellung des Scharniers in einer perspektivischen Ansicht von unten, |
| Fig. 5a, 5b | eine Schnittdarstellung des Scharniers sowie eine vergrößerte Darstellung entlang der Schnittebene A-A gemäß Fig. 5a, |
| Fig. 6 | eine Explosionsdarstellung des Scharniers in einer perspektivischen Ansicht von vorne, |
| Fig. 7 | das Scharnier im zusammengebauten Zustand in einer perspektivischen Ansicht von unten, |
| Fig.8 | eine schematische Darstellung von zwei relativ zueinander verdrehbaren Dämpfungsbauteilen, die jeweils mit makroskopischen Oberflächenelementen versehen sind, |
| Fig. 9a,9b | eine Explosionsdarstellung eines Dämpfers mit zwei relativ zueinander verdrehbaren Dämpfungsbauteilen sowie eine perspektivische Ansicht des Dämpfers im zusammengebauten Zustand, |
| Fig. 10a, 10b | zwei verschiedene perspektivische Ansichten des Dämpfers, |
| Fig. 11a-11c | eine Seitenansicht des Dämpfers sowie Darstellungen in einem Vertikalschnitt und in einem Horizontalschnitt. |

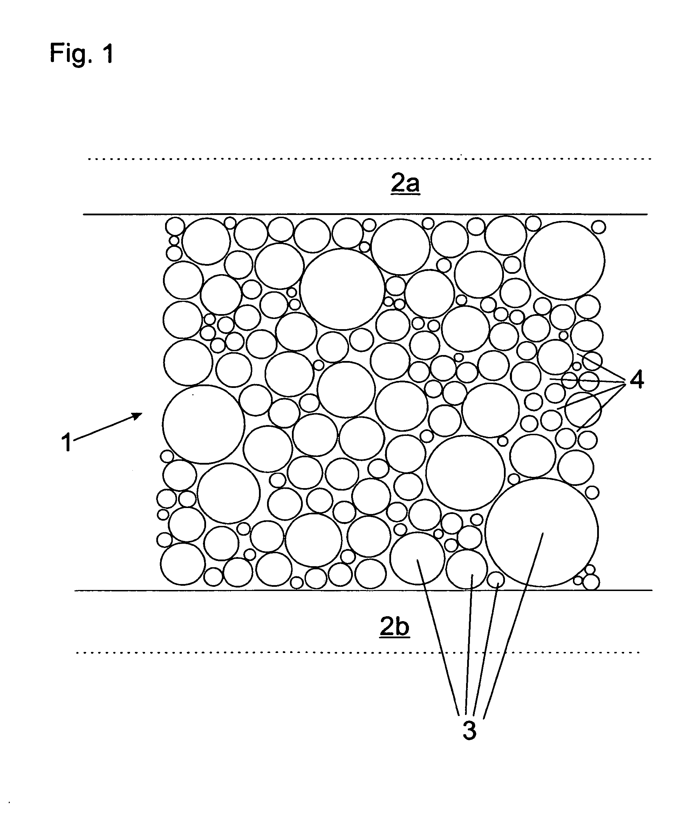

Fig. 1 zeigt schematisch einen zur Aufnahme eines Dämpfungsmediums vorgesehenen Raum 1 eines Möbeldämpfers. Der Raum 1 bildet sich zwischen einem ersten Dämpfungsbauteil 2a und einem zweiten Dämpfungsbauteil 2b aus, wobei die beiden Dämpfungsbauteile 2a und 2b relativ zueinander bewegbar - wie im diskutierten Ausführungsbeispiel gezeigt vorzugsweise relativ zueinander verdrehbar - angeordnet sind, wie dies bei so genannten Rotationsdämpfern der Fall ist. Zumindest einer der beiden Dämpfungsbauteile 2a, 2b ist durch eine Bewegung eines (hier nicht dargestellten) bewegbaren Möbelteiles antreibbar. Durch eine Verdrehung des ersten Dämpfungsbauteils 2a relativ zum zweiten Dämpfungsbauteil 2b (oder auch umgekehrt) wirken auf das im Raum 1 angeordnete Dämpfungsmedium Scherkräfte, welche die Dämpfungswirkung hervorrufen. Die Höhe des Raumes 1 wird vorzugsweise relativ klein gewählt, z.B. kleiner als 0,8 mm, vorzugsweise kleiner als 0,5 mm. Der Raum 1 ist mit einem Dämpfungsmedium befüllbar, das eine Vielzahl von Festkörperteilchen 3 unterschiedlicher Größe umfasst. Die verwendeten Festkörperteilchen 3 weisen eine vorgegebene Korngrößenverteilung auf, sodass durch die voneinander abweichende Größe der Festkörperteilchen 3 eine relativ hohe Packungsdichte herbeigeführt werden kann. Die Viskosität des Dämpfungsmediums wird durch die Größe der Festkörperteilchen 3 mitbestimmt. Die Viskosität bestimmt somit auch die Dämpfgeschwindigkeit des Dämpfers, sodass die zwischen den Festkörperteilchen 3 verbleibenden Zwischenräume nicht vollständig von Kleinstpartikeln ausgefüllt werden sollten. Zur Erzielung günstiger Dämpfungseigenschaften ist eine definierte Korngrößenverteilung der Festkörperteilchen 3 vorteilhaft. Die zwischen den Festkörperteilchen 3 verbleibenden Zwischenräume 4 werden mit einer Flüssigkeit - vorzugsweise einem synthetischen Öl - im Wesentlichen vollständig ausgefüllt. Bei einer durch den Dämpfungshub initiierten Bewegung zwischen Festkörperteilchen 3 und Flüssigkeit entstehen Scherkräfte, wobei die Übertragung der Momente im Dämpfungsmedium in Wechselwirkung zwischen Flüssigkeit und Festkörperteilchen 3 erfolgt. Im bewegten Zustand ist das Dämpfungsmedium gerade noch fließfähig, sodass eine Dämpfungswirkung generiert werden kann. Die Festkörperteilchen 3 sind kugelförmig oder annähernd kugelförmig ausgebildet und weisen einen Formfaktor $F > 0,5$, vorzugsweise zwischen 0,5 und 1,0, auf. Solche Festkörperteilchen 3 sind kommerziell im Handel erhältlich, wobei deren Rundform durch Flämmen (d.h. durch Einwirken von Hitze) herstellbar ist. Der Raum 1 des Dämpfers wird zweckmäßigerweise dort angeordnet, wo auch die größte Relativbewegung (z.B. die größte Drehgeschwindigkeit) auftritt. Bei einem Rotationsdämpfer kann es daher günstig sein, den Raum 1 möglichst entfernt zur koaxialen Drehachse der beiden Dämpfungsbauteile 2a, 2b anzuordnen. Die zum Ausfüllen der Zwischenräume 4 vorgesehene Flüssigkeit weist vorzugsweise ein Ethylen-$\alpha$-Olefin-Copolymer auf (z.B. Lucant® HC-2000 der Firma Mitsui Chemicals Corporation Ltd.). Darüber hinaus kann die Flüssigkeit mit einem Additiv - beispielsweise einem Silikonöl - versehen werden, wobei der Anteil des Silikonöls relativ zur Gesamtmenge der Flüssigkeit etwa 20 Gew.-% betragen kann. Durch eine im Wesentlichen kugelförmige Ausbildung der Festkörperteilchen 3 können diese während des Dämpfungshubes aneinander abrollen und kaum verkanten. Bei einer langsamen Bewegung (d.h. bei einer niedrigen Winkelgeschwindigkeit) ergibt sich eine Mischreibung durch die zwischen den Festkörperteilchen 3 angeordnete Flüssigkeit, bei einer höheren Winkelgeschwindigkeit hingegen wird die Flüssigkeit verdrängt und eine Dämpfung durch Festkörperreibung herbeigeführt.

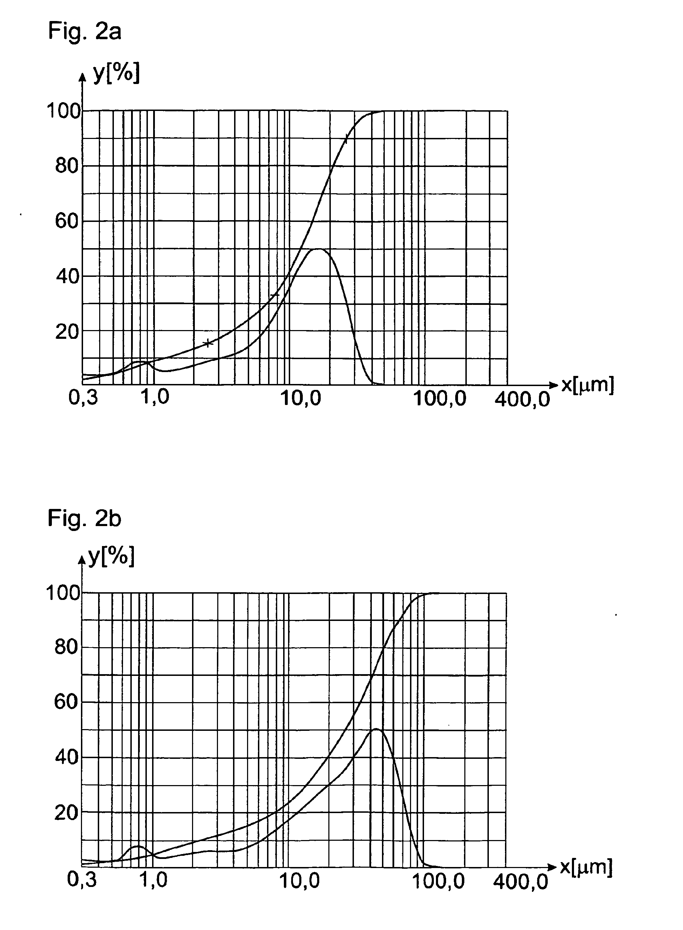

Fig. 2a zeigt die Korngrößenverteilung der Festkörperteilchen 3 anhand eines Histogramms, also eine grafische Darstellung der Häufigkeitsverteilung der verwendeten Festkörperteilchen 3 aufgetragen über den auftretenden Korngrößen. Vorzugsweise ist vorgesehen, dass der Anteil der in diesem Diagramm dargestellten Festkörperteilchen 3 etwa 15 Gew.-% relativ zur Gesamtmenge der Festkörperteilchen 3 beträgt. Der Durchmesser dieser Festkörperteilchen 3 ist an der logarithmisch skalierten x-Achse aufgetragen. Die vorkommende Häufigkeit dieser Festkörperteilchen 3 ist in prozentualer Angabe an der y-Achse skaliert. Als Beispielwert lässt sich aus diesem Diagramm ablesen, dass 50% der Festkörperteilchen 3 einen Durchmesser kleiner als 20 $\mu$m aufweisen. Fig. 2b zeigt die Korngrößenverteilung weiterer Festkörperteilchen 3, wobei der Anteil dieser Festkörperteilchen etwa 80% relativ zur Gesamtmenge der Festkörperteilchen 3 beträgt. Hierbei lässt sich als Beispielwert ablesen, dass 50% dieser Festkörperteilchen 3 einen Durchmesser von etwa 50 $\mu$m aufweisen. Die Gesamtmenge der Festkörperteilchen 3 wird also aus einem Summenwert der in Fig. 2a und Fig. 2b gezeigten Häufigkeitsverteilungen gebildet.

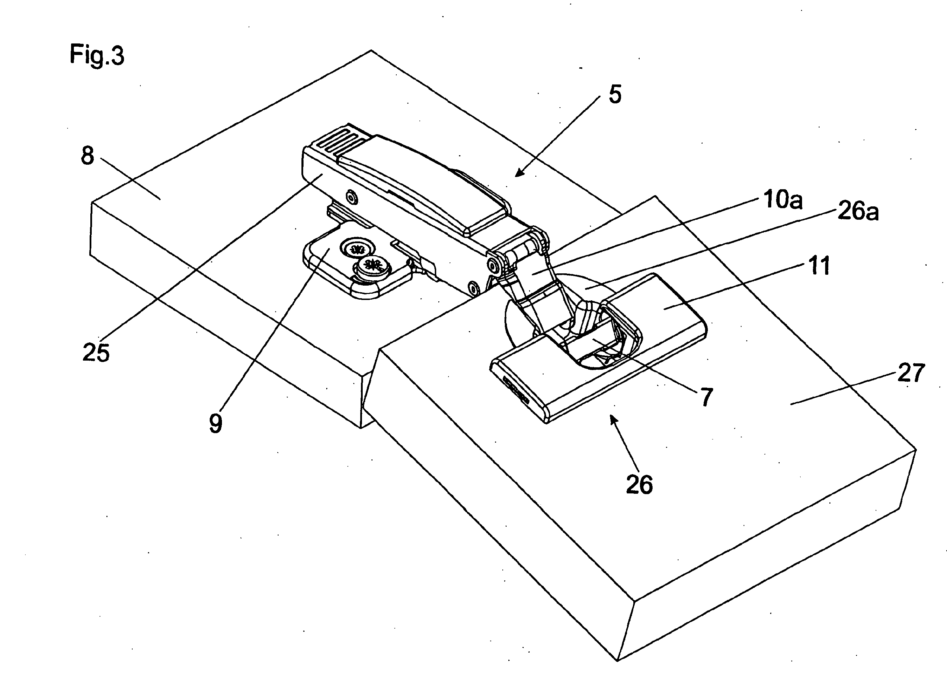

Fig. 3 zeigt ein mögliches' Ausführungsbeispiel eines Scharniers 5 mit Dämpfungsfunktion in Montagestellung. Im gezeigten Ausführungsbeispiel ist das Scharnier 5 zum Dämpfen einer Schließbewegung ausgebildet. Alternativ oder ergänzend kann auch vorgesehen sein, dass das Scharnier 5 eine Öffnungsbewegung eines bewegbaren Möbelteiles 27 dämpft. Das Scharnier 5 umfasst in einer an sich bekannten Weise eine am Möbelkorpus 8 angeschraubte Grundplatte 9, auf die ein erster Anschlagteil 25 in Form eines Scharnierarmes aufklippsbar ist. Im Weiteren umfasst das Scharnier 5 einen inneren Gelenkhebel 10b und einen äußeren Gelenkhebel 10a, die den zweiten Anschlagteil 26 mit dem Scharniertopf 26a gelenkig mit dem stationären Anschlagteil 25 verbinden. Der innere Gelenkhebel 10b ist auf Grund seiner gekröpften Ausführung in der gezeigten Darstellung verdeckt. Am bewegbaren Möbelteil 27 wird eine hier nicht zu sehende Bohrung vorgesehen, in die der Scharniertopf 26a - wie an sich bekannt - versenkt wird. Zur Befestigung des Scharniertopfes 26a ist darüber hinaus ein Befestigungsflansch 11 vorgesehen. Zu erkennen ist ein Betätigungselement 7, welches relativ zum Scharniertopf 26a innerhalb vorgegebener Grenzen schwenkbar gelagert ist. Ab einer bestimmten Relativstellung der beiden Anschlagteile 25, 26 zueinander wird das Betätigungselement 7 vom äußeren Gelenkhebel 10a beaufschlagt. Hierbei kann das Betätigungselement im Zuge der Schließbewegung des Scharniers 5 vollständig in den Scharniertopf 26a eingedrückt werden, wobei diese Bewegung des Betätigungselementes 7 auf einen hier nicht ersichtlichen Dämpfer übertragen wird, sodass dadurch die Bewegung des Betätigungselementes 7 (und damit die Schließbewegung des bewegbaren Möbelteiles 27 bis hin zur vollständigen Schließstellung desselben) gedämpft werden kann.

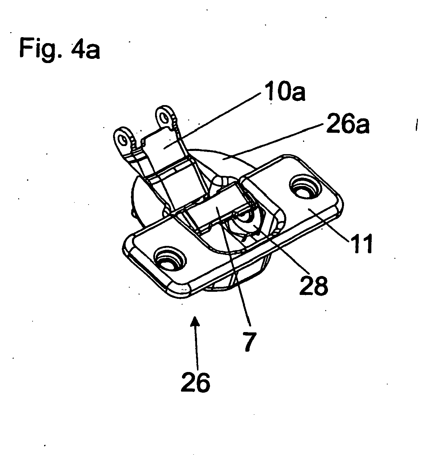

Fig. 4a zeigt in einer perspektivischen Ansicht von oben den zweiten Anschlagteil 26 mit dem Scharniertopf 26a und dem äußeren Gelenkhebel 10a, der zur Beaufschlagung des drehbar gelagerten Betätigungselementes 7 vorgesehen ist. Gemäß einer Variante kann auch vorgesehen werden, dass das Betätigungselement 7 auch vom Scharnierarm oder vom bewegbaren Möbelteil 27 beaufschlagbar ist. Zu erkennen ist ein mit dem Betätigungselement 7 zumindest während des Dämpfungshubes in Wirkverbindung stehender Dämpfer 28 in Form eines Rotationsdämpfers, der in Montagestellung an einer seitlichen Außenwand des Scharniertopfes 26a und sowie unterhalb des Befestigungsflansches 11 des Scharniertopfes 26a befestigt ist.

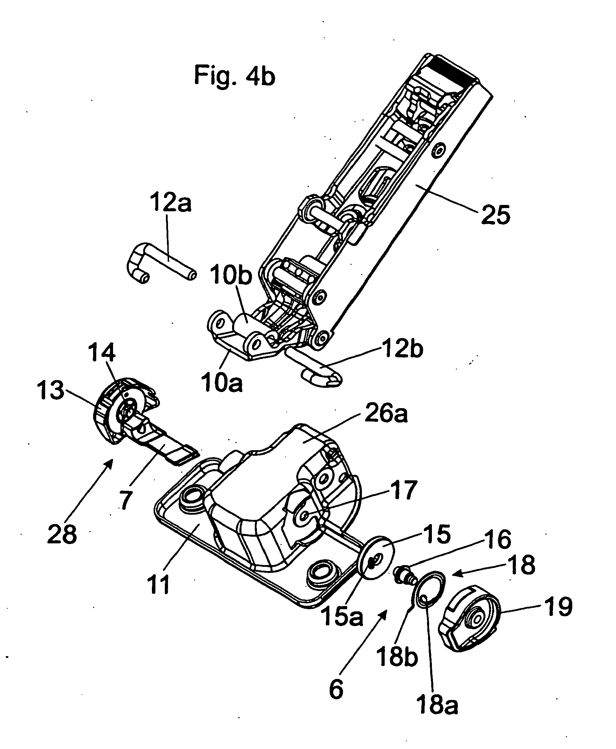

Fig. 4b zeigt eine perspektivische Unteransicht des Scharniers 5 in einer Explosionsdarstellung. Zu erkennen ist der am Möbelkorpus 8 zu befestigende Anschlagteil 25 in Form des Scharnierarmes, der mit der in Fig. 3 gezeigten Grundplatte 9 lösbar verrastbar ist. Am Scharnierarm 25 sind ein äußerer Gelenkhebel 10a und ein innerer Gelenkhebel 10b gelagert, die über Gelenkbolzen 12a, 12b in Montagestellung eine gelenkige Verbindung zum Scharniertopf 26a herstellen. Zu erkennen ist der Dämpfer 28 in Form eines Rotationsdämpfers, der ein Dämpfergehäuse 13 und ein an der Drehachse 14 gelagertes Betätigungselement 7 in Form eines Schwenkhebels umfasst. Eine vom Dämpfer 28 gesonderte Baueinheit für den Rückstellmechanismus 6 ist an einer gegenüberliegenden Seitenwand des Scharniertopfes 26a vorgesehen. Der Rückstellmechanismus 6 dient dazu, das Betätigungselement 7 des Dämpfers 28 nach erfolgter Dämpfung wieder in eine Bereitschaftsstellung für den nächsten Dämpfungshub zurückzubewegen. Der Rückstellmechanismus 6 umfasst hierfür ein drehbar gelagertes Rückstellelement 15, das in Montagestellung mit dem freien Ende des Betätigungselementes 7 des Dämpfers 28 verbunden ist. Zweckmäßigerweise ist zur Befestigung des Betätigungselementes 7 mit dem Rückstellelement 15 eine mechanische Rastverbindung, vorzugsweise eine Schnappverbindung, vorgesehen. Zur Lagerung des Rückstellmechanismus 6 am Scharniertopf 26a ist ein Achszapfen 16 vorgesehen, der im zusammengebauten Zustand des Scharniers 5 in das Achsloch 17 des Scharniertopfes 26a ragt. Eine Federvorrichtung 18, die im gezeigten Ausführungsbeispiel als Torsionsfeder ausgebildet ist, dient zur Rückstellung des Rückstellelementes 15 (und damit des Betätigungselementes 7) nach erfolgtem Dämpfungshub. Die Federvorrichtung 18 in Form der Torsionsfeder umfasst ein erstes freies Ende 18a, das an einem Lagerpunkt 15a des Rückstellelements 15 angreift. Das zweite freie Ende 18b der Federvorrichtung 18 wird am ortsfesten Rückstellgehäuse 19 montiert. Beim Dämpfungshub wird somit das Betätigungselement 7 des Dämpfers 28 durch den äußeren Gelenkhebel 10a in den Scharniertopf 26a hineingedrückt, wodurch auch das Rückstellelement 15 des Rückstellmechanismus 6 um den Achszapfen 16 rotiert wird. Im Zuge dieser Schließbewegung des Scharniers 5 wird auch die Federvorrichtung 18 gespannt. Ist das Betätigungselement 7 vollständig in den Scharniertopf 26a eingedrückt, so ist auch die Federvorrichtung 18 maximal aufgeladen. Wird nun das Betätigungselement 7 vom äußeren Gelenkhebel 10a wieder entlastet, so wird das Rückstellelement 15 (und damit das Betätigungselement 7) durch die in der Federvorrichtung gespeicherte Energie wieder aus dem Scharniertopf 26a herausgedrückt, sodass das Betätigungselement 7 nach erfolgter Dämpfung wieder eine für den nächsten Dämpfungshub vorgesehene Position einnehmen kann.

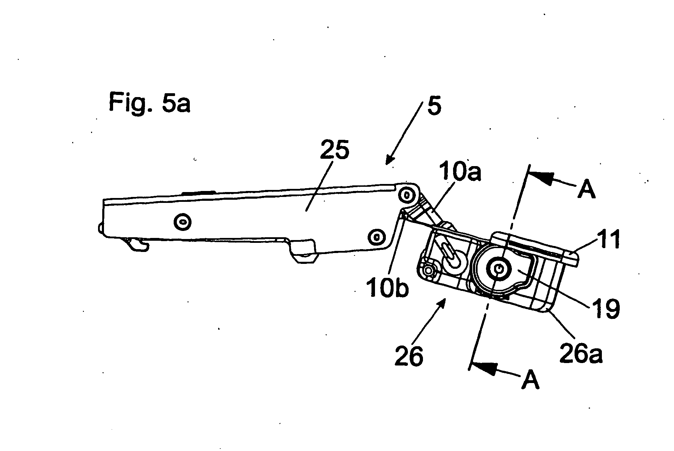

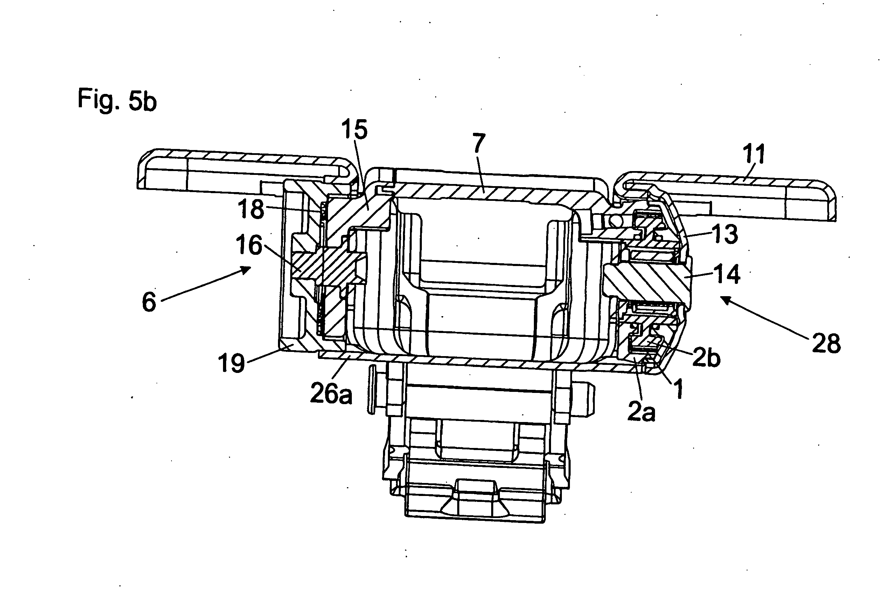

Fig. 5a zeigt eine Schnittdarstellung des Scharniers 5 im zusammengebauten Zustand. Zu erkennen ist der erste Anschlagteil 25 in Form eines Scharnierarmes und der zweite Anschlagteil 26 in Form des Scharniertopfes 26a, der über die beiden Gelenkhebel 10a, 10b schwenkbar mit dem ersten Anschlagteil 25 verbunden ist. An einer seitlichen Außenwand des Scharniertopfes 26a lagert das Rückstellgehäuse 19 des Rückstellmechanismus 6. Fig. 5b zeigt eine vergrößerte Darstellung entlang einer Ebene in Richtung der Pfeile A-A gemäß Fig. 5a. Den oberen Abschluss bildet der Befestigungsflansch 7 des Scharniertopfes 26a, wobei auf einer Seite des Scharniertopfes 26a der Rückstellmechanismus 6 und diametral gegenüber der Dämpfer 28 angeordnet ist. Der Rückstellmechanismus 6 umfasst ein stationäres Rückstellgehäuse 19 und ein relativ zum Achszapfen 16 drehbar gelagertes Rückstellelement 15, wobei die Federvorrichtung 18 zur Rückstellung des Rückstellelementes 15 ersichtlich ist. Ebenso erkennbar ist die Verbindung zwischen dem Betätigungselement 7 und dem Rückstellelement 15. Der auf der anderen Seite des Scharniertopfes 26a gelagerte Dämpfer 28 umfasst eine Drehachse 14, die zusammen mit dem Dämpfergehäuse 13 drehfest am Scharniertopf 26a fixiert ist. Das Betätigungselement 7 steht mit einem drehbaren Dämpfungsbauteil 2a zumindest zeitweise in Wirkverbindung, sodass sich beim Eindrücken des Betätigungselements 7 in den Scharniertopf 26a der erste Dämpfungsbauteil 2a relativ zum zweiten Dämpfungsbauteil 2b verdreht. Zwischen dem ersten Dämpfungsbauteil 2a und dem zweiten Dämpfungsbauteil 2b ist ein ringförmiger Raum 1 zur Aufnahme des in Rede stehenden Dämpfungsmediums vorgesehen. Auf diese Weise wirken auf das im Raum 1 angeordnete Dämpfungsmedium Scherkräfte, welche die Dämpfungswirkung hervorrufen. Angemerkt sei, dass der gezeigte Dämpfer 28 lediglich beispielhaft dargestellt ist. Der Fachmann kann grundsätzlich alle ihm bekannten und geeigneten Dämpfer 28 im Zusammenhang mit dem Erfindungsgedanken einsetzen.

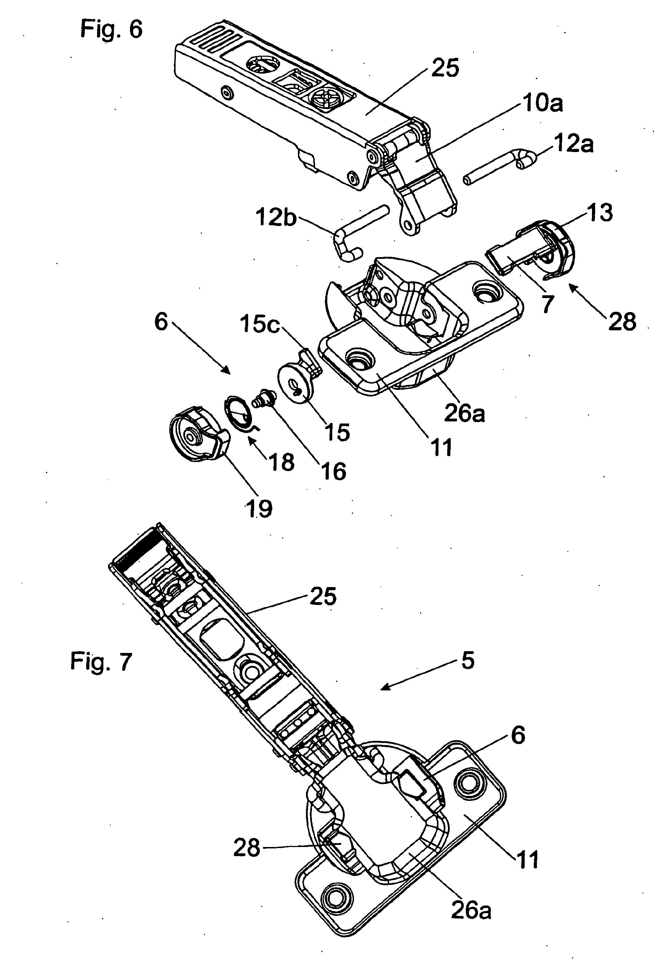

Fig. 6 zeigt eine zur Fig. 4b analoge Explosionsdarstellung des Scharniers 5 in einer perspektivischen Ansicht von oben. Als Besonderheit ist hierbei der Rastteil 15c anzuführen, durch den eine Schnappverbindung zwischen Rückstellelement 15 und dem Betätigungselement 7 des Dämpfers 28 herstellbar ist. Das Betätigungselement 7 kann zumindest teilweise aus einem metallischen Werkstoff gebildet sein, wodurch eine präzise Kraftübertragung zwischen dem Betätigungselement 7 und dem Dämpfer 28 sowie zwischen dem Rückstellmechanismus 6 und dem Betätigungselement 7 gewährleistet ist.

Fig. 7 zeigt das Scharnier 5 in einer perspektivischen Ansicht von unten, wobei die beiden getrennten Baueinheiten des Dämpfers 28 und des Rückstellmechanismus 6 ersichtlich sind. Der Scharniertopf 26a kann gemeinsam mit den beiden seitlich angeordneten Baueinheiten in einer am bewegbaren Möbelteil 27 kreisrunden Bohrung eingesetzt werden.

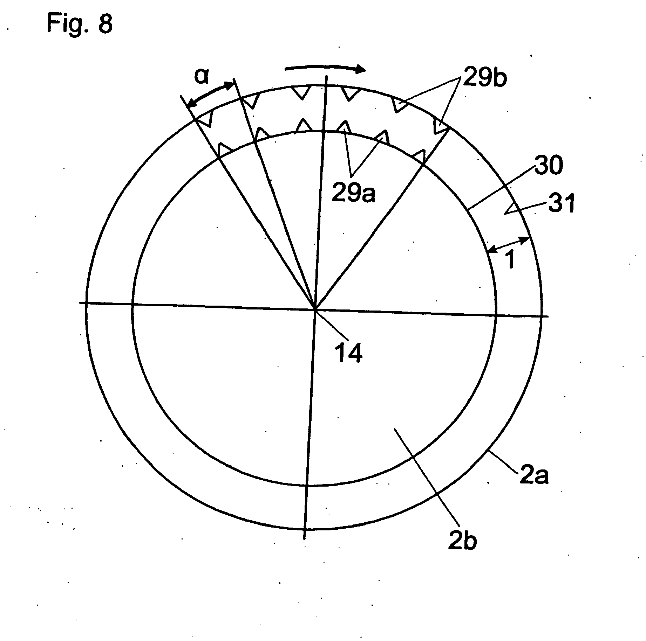

Fig. 8 zeigt in schematischer Weise die beiden Dämpfungsbauteile 2a, 2b, die um eine gemeinsame Drehachse 14 relativ zueinander verdrehbar gelagert sind. Zu erkennen ist, dass beide Dämpfungsbauteile 2a, 2b makroskopische Oberflächenelemente 29a, 29b zur Vergrößerung ihrer für den Kontakt zu dem Dämpfungsmedium vorgesehenen Oberfläche aufweisen. Beispielhaft kann vorgesehen sein, dass die Oberflächenelemente 29a, 29b Noppen, Rillen, Spitzen, Zähne, Vertiefungen, Erhebungen und/oder eine aufgeraute Oberflächenstruktur aufweisen. Gemäß einer bevorzugten Ausführungsform der Erfindung kann vorgesehen sein, dass die Oberflächenelemente 29a am Umfangsrand des drehbaren Dämpfungsbauteiles 2b angeordnet sind, wobei der relative Winkelabstand a zweier benachbarter Oberflächenelemente 29a - bezogen auf die Drehachse 14 des Dämpfungsbauteiles 2b - zwischen 5° und 20°, vorzugsweise zwischen 8° und 15°, liegt. Angemerkt sei, dass die Form und Größe der makroskopischen Oberflächenelemente 29a, 29b wesentlichen Einfluss auf die Schließgeschwindigkeit des Dämpfers 28 nimmt. Es kann auch günstig sein, am inneren Dämpfungsbauteil 2b sowie am äußeren Dämpfungsbauteil 2b die gleiche Anzahl, Form und Größe der makroskopischen Oberflächenelemente 29a, 29b vorzusehen. Die zeitliche Anpassung des Moments hinkt bei höheren Dämpfergeschwindigkeiten der Veränderung der Scherrate hinterher, was durch den elastischen Anteil des viskoelastischen Dämpfermediums begründet ist. Diesen Effekt kann man durch die Anordnung der makroskopischen Oberflächenelemente 29a, 29b nützen, welche abschnittsweise den Strömungsquerschnitt des Dämpfungsmediums im Raum 1 reduzieren. Bevor sich also das Moment deutlich "entspannen" kann, passiert das Dämpfungsmedium den nächsten von den Oberflächenelementen 29a, 29b reduzierten Strömungsquerschnitt, wodurch ein vorteilhafter zusätzlicher Dämpfeffekt generierbar ist.

Die makroskopischen Oberflächenelemente 29a sind nur schematisch dargestellt, sie sind vorzugsweise um den gesamten Umfangsrand 30 des inneren Dämpfungsbauteiles 2b verteilt, während die makroskopischen Oberflächenelemente 29b ebenfalls in umlaufender Weise an der inneren Fläche 31 des äußeren Dämpfungsbauteiles 2b angeordnet sind. Der Raum 1 ist zwischen einem peripheren Umfangsrand 30 des inneren Dämpfungsbauteiles 2b und einer inneren Fläche 31 des äußeren Dämpfungsbauteiles 2a gebildet. Die durch die makroskopischen Oberflächenelemente 29a, 29b gebildete Verzahnung wirkt vorzugsweise im Emotionsbereich, d.h. in der Phase, in sich der das bewegbare Möbelteil 5, 27 bzw. die Möbelbeschlagteile 25, 26 unmittelbar vor der vollständigen Schließstellung befinden (Winkelgeschwindigkeit etwa kleiner gleich 5°/s). Bei hohen Winkelgeschwindigkeiten hingegen ist die Funktion des Dämpfers auch ohne diese Verzahnungen möglich. Die Anzahl der Zähne der Innen- und Außenverzahnung ergibt eine "Anregungsfrequenz", durch die Zahnhöhe ist das Drehmoment steuerbar, wobei auch eine Entlastung des Drehmoments bei niedrigen Drehzahlen herbeigeführt werden kann. Bei hohen Winkelgeschwindigkeiten wirkt das Medium fast ausschließlich im Raum 1 zwischen den Zahnspitzen des inneren Dämpfungsbauteiles 2b und den Zahnspitzen des vorzugsweise feststehenden äußeren Dämpfungsbauteiles 2a (Drosseleffekt). Bei niedrigen Winkelgeschwindigkeiten hingegen kann das Dämpfungsmedium in die Zahntiefen eindringen, wodurch ein anderes Dämpfverhalten ermöglicht werden kann. Das Verhältnis der Anzahl der am drehbaren Dämpfungsbauteil 2b angeordneten makroskopischen Oberflächenelemente 29a kann zur Anzahl der makroskopischen Oberflächenelemente 29b mit 1:1 festgesetzt werden, obwohl ein davon abweichendes Verhältnis ebenfalls möglich ist.

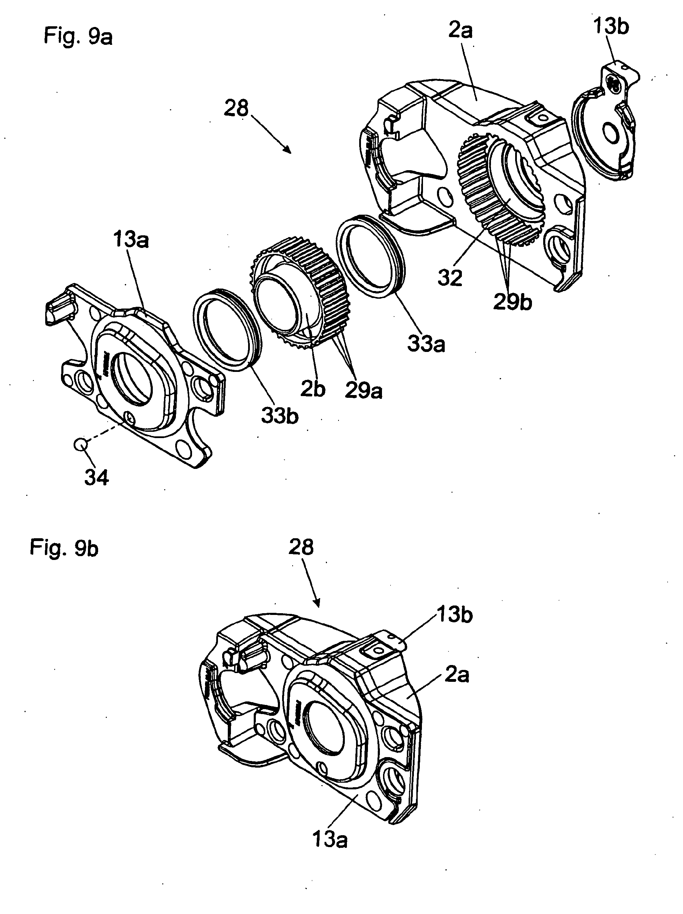

Fig. 9a zeigt eine Explosionsdarstellung des Dämpfers 28 mit einem äußeren Dämpfungsbauteil 2ä, welcher zur Aufnahme des drehbaren Dämpfungsbauteiles 2b einen im Wesentlichen zylindrisch ausgebildeten Hohlraum 32 aufweist. Zu erkennen sind auch die an der Umfangsfläche des Hohlraumes 32 umlaufend ausgebildeten makroskopischen Oberflächenelemente 29b in Form von Verzahnungen. Der innere Dämpfungsbauteil 2a ist in Montagelage in diesem Hohlraum 32 eingesetzt. Im gezeigten Ausführungsbeispiel ist der drehbare Dämpfungsbauteil 2b im Wesentlichen radförmig ausgebildet und weist ebenfalls makroskopische Oberflächenelemente 29a in Form von Verzahnungen auf. Der radförmige Dämpfungsbauteil 2b ist durch das in Fig. 6 gezeigte Betätigungselement 7 antreibbar. Hierbei kann auch ein - hier nicht gezeigter - Freilauf vorgesehen werden, wobei die Dämpfungsbauteile 2a, 2b, zwischen denen das Dämpfungsmedium wirkt bzw. angeordnet ist, während des Rückstellhubes in ihrer Relativposition zueinander verharren können. Der Freilauf ermöglicht einen Rückstellhub durch die in Fig. 6 gezeigte Feder 18, ohne dass dazu die Dämpfungsbauteile 2a, 2b des Dämpfers 28 relativ zueinander bewegt werden müssen. Erkennbar sind Dichtungsringe 33a und 33b und die Dämpfergehäuseteile 13a und 13b, welche mit dem äußeren Dämpfungsbauteil 2a verbunden sind. Der Gehäuseteil 13a weist eine Einfüllöffnung für das Dämpfungsmedium auf, welche durch ein Verschlusselement 34 in Form einer Kugel verschließbar ist. Fig. 9b zeigt den Dämpfer 28 im zusammengebauten Zustand.

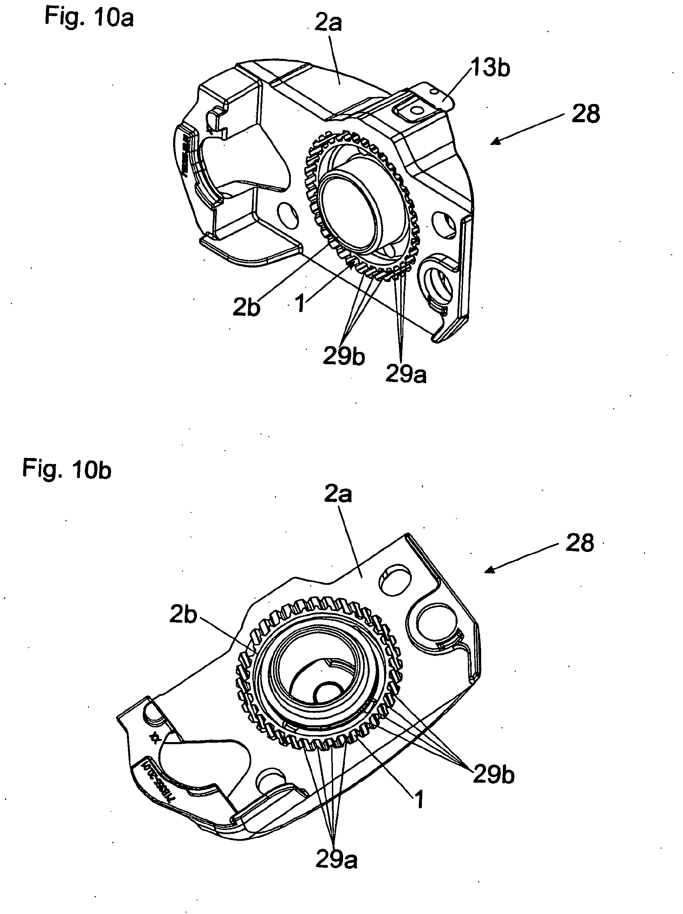

Fig. 10 zeigt die Darstellung gemäß Fig. 9b, wobei aus Gründen der Übersichtlichkeit das Dämpfergehäuseteil 13a weggelassen wurde. Der im Wesentlichen radförmige Dämpfungsbauteil 2b reicht bis fast an den äußeren Dämpfungsbauteil 2a heran. Der zur Aufnahme des Dämpfungsmediums vorgesehene Raum 1 ist im gezeigten Ausführungsbeispiel als ein den inneren Dämpfungsbauteil 2b vollständig umgebender Ringspalt ausgeführt, wobei die Dämpfwirkung des Dämpfers 28 - vorzugsweise im Wesentlichen ausschließlich - auf Scherwirkung beruht. Der Raum 1 in Form des Ringspaltes verläuft annähernd ringförmig in orthogonaler Richtung zur Drehachse 14 des inneren Dämpfungsbauteiles 2b.

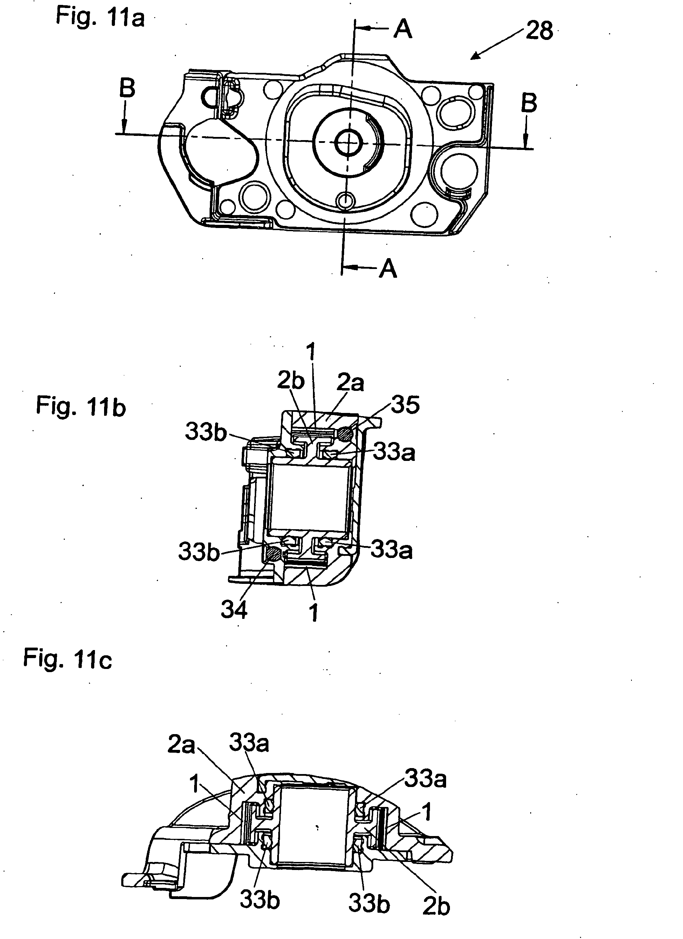

Fig. 11a zeigt eine Seitenansicht des Dämpfers 28, Fig. 11 b zeigt einen Vertikalschnitt entlang der Ebene A-A der Fig. 11a. Zu erkennen ist der innerhalb des stationären Dämpfungsbauteiles 2a drehbar gelagerte Dämpfungsbauteil 2b und der dazwischen liegende Raum 1 zur Aufnahme des Dämpfungsmediums. Um eine Auslaufen des Dämpfungsmediums zu verhindern, sind flankierende Dichtungsringe 33a und 33b vorgesehen. Bei der Befüllung des Dämpfungsmediums wird dieses erwärmt und anschließend in den als Scherspalt ausgebildeten Raum 1 eingespritzt. Zur gleichmäßigen Befüllung des Dämpfers 28 ist eine Entlüftungskugel 35 vorgesehen, die einen Austritt des bei der Befüllung verdrängten Luftvolumens gestattet. Zum Verschluss des Dämpfers 28 ist ein Verschlusselement 34 in Form der Kugel vorgesehen. Fig. 11 c zeigt einen Horizontalschnitt entlang der Ebene B-B der Fig. 11a.

Die gegenständliche Erfindung beschränkt sich nicht auf die gezeigte Ausführungsbeispiele, sondern umfasst bzw. erstreckt sich auf alle Varianten und technischen Äquivalente, welche in die Reichweite der nachfolgenden Ansprüche fallen können. Der in den Figuren beschriebene Dämpfer 28 sowie der gezeigte Rückstellmechanismus 6 sind nur als mögliche Ausführungsbeispiele zu verstehen, auf Basis derer die Erfindung erläutert wurde.

**Patentansprüche**

1. Möbelbeschlag mit einem Dämpfer (28), wobei der Dämpfer (28) einen Raum (1) zur Aufnahme eines Dämpfungsmediums aufweist, **dadurch gekennzeichnet, dass** der Raum (1) im Wesentlichen vollständig mit einer Vielzahl von Festkörperteilchen (3) gefüllt ist, wobei die zwischen den Festkörperteilchen (3) verbleibenden Zwischenräume (4) im Wesentlichen vollständig von einer Flüssigkeit ausgefüllt sind.

2. Möbelbeschlag nach Anspruch 1, **dadurch gekennzeichnet, dass** die Festkörperteilchen (3) im Wesentlichen kugelförmig ausgebildet sind.

3. Möbelbeschlag nach einem Anspruch 1 oder 2, **dadurch gekennzeichnet, dass** der Anteil der Festkörperteilchen (3) relativ zum Anteil der Flüssigkeit zwischen 75 Gew.-% und 98 Gew.-%, vorzugsweise zwischen 80 Gew.-% und 95 Gew.-%, liegt, und dass die Festkörperteilchen (3) vorzugsweise einen Durchmesser zwischen 0,2 $\mu$m und 100 $\mu$m aufweisen.

4. Möbelbeschlag nach einem der Ansprüche 1 bis 3, **dadurch gekennzeichnet, dass** die Festkörperteilchen (3) eine vorgegebene Korngrößenverteilung aufweisen, wobei etwa 80% der Festkörperteilchen (3) eine maximale Größe von 100 $\mu$m und etwa 20% der Festkörperteilchen (3) eine maximale Größe von 30 $\mu$m aufweisen, wobei bevorzugt vorgesehen ist, dass etwa 50% der Festkörperteilchen (3) einen Durchmesser zwischen 10 $\mu$m und 100 $\mu$m aufweisen.

5. Möbelbeschlag nach einem der Ansprüche 1 bis 4, **dadurch gekennzeichnet, dass** die Flüssigkeit ein Polymer, vorzugsweise ein Ethylen-$\alpha$-Olefin-Copolymer, aufweist.

6. Möbelbeschlag nach einem der Ansprüche 1 bis 5, **dadurch gekennzeichnet, dass** der Raum (1) zwischen zwei bei einem Dämpfungshub relativ zueinander bewegbaren Dämpfungsbauteilen (2a, 2b) angeordnet ist.

7. Möbelbeschlag nach Anspruch 6, **dadurch gekennzeichnet, dass** die Dämpfungsbauteile (2a, 2b) relativ zueinander verdrehbar angeordnet sind.

8. Möbelbeschlag nach Anspruch 6 oder 7, **dadurch gekennzeichnet, dass** zumindest ein Dämpfungsbauteil (2a, 2b) makroskopische Oberflächenelemente (29a, 29b) zur Vergrößerung seiner für den Kontakt mit dem Dämpfungsmedium vorgesehenen Oberfläche aufweist.

9. Möbelbeschlag nach Anspruch 8, **dadurch gekennzeichnet, dass** beide Dämpfungsbauteile (2a, 2b) makroskopische Oberflächenelemente (29a, 29b) aufweisen.

10. Möbelbeschlag nach Anspruch 8 oder 9, **dadurch gekennzeichnet, dass** die Oberflächenelemente (29a, 29b) Noppen, Rillen, Spitzen, Zähne, Vertiefungen, Erhebungen oder eine aufgeraute Oberflächenstruktur umfassen.

11. Möbelbeschlag nach einem der Ansprüche 8 bis 10, **dadurch gekennzeichnet, dass** die Oberflächenelemente (29a, 29b) am Umfangsrand eines drehbaren Dämpfungsbauteiles (2a, 2b) angeordnet sind, wobei der relative Winkelabstand ($\alpha$) zweier benachbarter Oberflächenelemente (29a, 29b) - bezogen auf die Drehachse (14) des Dämpfungsbauteiles (2a, 2b) - zwischen 5° und 20°, vorzugsweise zwischen 8° und 15°, liegt.

12. Möbelbeschlag nach einem der Ansprüche 6 bis 11, **dadurch gekennzeichnet, dass** ein drehbares Dämpfungsbauteil (2b) im Wesentlichen radförmig ausgebildet ist.

13. Möbelbeschlag nach einem der Ansprüche 6 bis 12, **dadurch gekennzeichnet, dass** der Raum (1) zwischen einer peripheren Umfangsfläche (30) des drehbaren Dämpfungsbauteiles (2b) und einer inneren Fläche (31) des anderen Dämpfungsbauteiles (2a) gebildet ist.

14. Möbelbeschlag nach einem der Ansprüche 6 bis 13, **dadurch gekennzeichnet, dass** der Dämpfungsbauteil (2b) bis fast an den Dämpfungsbauteil (2a) heranreicht.

15. Möbelbeschlag nach einem der Ansprüche 1 bis 14, **dadurch gekennzeichnet, dass** der Raum (1) als ein im Wesentlichen umlaufender, ringförmiger Scherspalt ausgebildet ist.

16. Möbelbeschlag nach einem der Ansprüche 1 bis 15, **dadurch gekennzeichnet, dass** der Möbelbeschlag als Möbelscharnier, als Schubladenausziehführung oder als Stellmechanismus zum Bewegen einer Möbelklappe ausgeführt ist.

**Claims**

1. A furniture fitting comprising a damper (28), wherein the damper (28) has a space (1) for accommodating a damping medium, **characterized in that** the space (1) is substantially completely filled with a multiplicity of solid particles (3), wherein the intermediate spaces (4) remaining between the solid particles (3) are substantially completely filled by a liquid.

2. The furniture fitting according to claim 1, **characterized in that** the solid particles (3) are of a substantially spherical configuration.

3. The furniture fitting according to claim 1 or 2, **characterized in that** the proportion of the solid particles (3) relative to the proportion of the liquid is between 75% by weight and 98% by weight, preferably between 80% by weight and 95% by weight, and **in that** the solid particles (3) are of a diameter of between 0.2 $\mu$m and 100 $\mu$m.

4. The furniture fitting according to one of the claims 1 to 3, **characterized in that** the solid particles (3) have a predetermined grain size distribution, wherein about 80% of the solid particles (3) are of a maximum size of 100 $\mu$m and about 20% of the solid particles (3) are of a maximum size of 30 $\mu$m, wherein it is preferably provided that about 50% of the solid particles (3) are of a diameter of between 10 $\mu$m and 100 $\mu$m.

5. The furniture fitting according to one of the claims 1 to 4, **characterized in that** the liquid has a polymer, preferably an ethylene-$\alpha$-olefin copolymer.

6. The furniture fitting according to one of the claims 1 to 5, **characterized in that** the space (1) is arranged between two damping components (2a, 2b) movable relative to each other in a damping stroke.

7. The furniture fitting according to claim 6, **characterized in that** the damping components (2a, 2b) are arranged rotatably relative to each other.

8. The furniture fitting according to claim 6 or 7, **characterized in that** at least one damping component (2a, 2b) has macroscopic surface elements (29a, 29b) to enlarge its surface intended for contact with the damping medium.

9. The furniture fitting according to claim 8, **characterized in that** both damping components (2a, 2b) have macroscopic surface elements (29a, 29b).

10. The furniture fitting according to claim 8 or 9, **characterized in that** the surface elements (29a, 29b) include knobs, grooves, points, teeth, recesses, raised portions or a roughened surface structure.

11. The furniture fitting according to one of the claims 8 to 10, **characterized in that** the surface elements (29a, 29b) are arranged at the peripheral edge of a rotatable damping component (2a, 2b), wherein the relative angular spacing ($\alpha$) of two adjacent surface elements (29a, 29b) - with respect to the axis of rotation (14) of the damping component (2a, 2b) - is between 5° and 20°, preferably between 8° and 15°.

12. The furniture fitting according to one of the claims 6 to 11, **characterized in that** a rotatable damping component (2b) is of a substantially wheel-shaped configuration.

13. The furniture fitting according to one of the claims 6 to 12, **characterized in that** the space (1) is formed between a peripheral circumferential surface (30) of the rotatable damping component (2b) and an inner surface (31) of the other damping component (2a).

14. The furniture fitting according to one of the claims 6 to 13, **characterized in that** the damping component (2b) extends almost to the damping component (2a).

15. The furniture fitting according to one of the claims 1 to 14, **characterized in that** the space (1) is in the form of a substantially peripherally extending, annular shearing gap.

16. The furniture fitting according to one of the claims 1 to 15, **characterized in that** the furniture fitting is in the form of a furniture hinge, a drawer pull-out extension guide or an actuating mechanism for moving a furniture flap.

**Revendications**

1. Garniture pour meubles avec un amortisseur (28), dans laquelle l'amortisseur (28) présente un espace (1) pour recevoir un fluide amortisseur, **caractérisée en ce que** l'espace (1) est rempli essentiellement intégralement d'une multitude de particules de corps solide (3), dans lequel les espaces intermédiaires (4) restants entre les particules de corps solide (3) sont remplis essentiellement intégralement d'un liquide.

2. Garniture pour meubles selon la revendication 1, **caractérisée en ce que** les particules de corps solide (3) sont conçues essentiellement en forme de billes.

3. Garniture pour meubles selon la revendication 1 ou 2, **caractérisée en ce que** la part de particules de corps solide (3) se situe par rapport à la part de liquide entre 75 % en poids et 98 % en poids, de préférence entre 80 % en poids et 95 % en poids, et **en ce que** les particules de corps solide (3) présentent de préférence un diamètre situé entre 0,2 $\mu$m et 100 $\mu$m.

4. Garniture pour meubles selon l'une des revendications 1 à 3, **caractérisée en ce que** les particules de corps solide (3) présentent une répartition prédéfinie de dimensions de particules, dans laquelle 80% environ des particules de corps solide (3) présentent une taille maximale de 100 $\mu$m et environ 20% des particules de corps solide (3) une taille maximale de 30 $\mu$m, dans laquelle il est prévu de préférence que 50% environ des particules de corps solide (3) présentent un diamètre entre 10 $\mu$m et 100 $\mu$m.

5. Garniture pour meubles selon l'une des revendications 1 à 4, **caractérisée en ce que** le liquide présente un polymère, de préférence un copolymère d'éthylène et d'alpha-oléfine.

6. Garniture pour meubles selon l'une des revendications 1 à 5, **caractérisée en ce que** l'espace (1) est disposé entre deux composants d'amortissement (2a, 2b) mobiles l'un par rapport à l'autre lors d'une course d'amortissement.

7. Garniture pour meubles selon la revendication 6, **caractérisée en ce que** les composants d'amortissement (2a, 2b) sont disposés de manière à pouvoir tourner l'un par rapport à l'autre.

8. Garniture pour meubles selon la revendication 6 ou 7, **caractérisée en ce que** au moins un composant d'amortissement (2a, 2b) présente des éléments de surface macroscopiques (29a, 29b) pour agrandir sa surface prévue pour le contact avec le fluide amortisseur.

9. Garniture pour meubles selon la revendication 8, **caractérisée en ce que** les deux composants d'amortissement (2, 2b) présentent des éléments de surface macroscopiques (29a, 29b).

10. Garniture pour meubles selon la revendication 8 ou 9, **caractérisée en ce que** les éléments de surface (29a, 29b) comprennent des picots, des rainures, des pointes, des dents, des cavités, des élévations ou une structure de surface rendue rugueuse.

11. Garniture pour meubles selon l'une des revendications 8 à 10, **caractérisée en ce que** les éléments de surface (29a, 29b) sont disposés sur le bord circonférentiel d'un composant d'amortissement rotatif (2a, 2b), dans laquelle l'espacement angulaire relatif ($\alpha$) de deux éléments de surface contigus (29a, 29b) est situé - par rapport à l'axe de rotation (14) du composant d'amortissement (2a, 2b) - entre 5° et 20°, de préférence entre 8° et 15°.

12. Garniture pour meubles selon l'une des revendications 6 à 11, **caractérisée en ce qu'**un composant d'amortissement rotatif (2b) est conçu essentiellement en forme de roue.

13. Garniture pour meuble selon l'une des revendications 6 à 12, **caractérisée en ce que** l'espace (1) est formé entre une surface circonférentielle périphérique (30) du composant d'amortissement rotatif (2b) et une surface interne (31) de l'autre composant d'amortissement (2a).

14. Garniture pour meubles selon l'une des revendications 6 à 13, **caractérisée en ce que** le composant d'amortissement (2b) atteint presque le composant d'amortissement (2a).

15. Garniture pour meubles selon l'une des revendications 1 à 14, **caractérisée en ce que** l'espace (1) est conçu comme une fente de cisaillement essentiellement périphérique, en forme d'anneau.

16. Garniture pour meubles selon l'une des revendications 1 à 15, **caractérisée en ce que** la garniture pour meubles est réalisée comme une charnière de meuble, comme un guidage d'ouverture de tiroir ou comme un mécanisme de réglage pour déplacer un abattant de meuble.

Fig. 1

Fig. 2a

Fig. 2b

Fig.3

EP 2 318 632 B1

Fig. 4a

Fig. 4b

Fig. 5a

Fig. 5b

Fig. 6

25

10a

12a

12b

13

7

28

6

15c

15

16

18

19

26a

11

Fig. 7

25

5

6

28

11

26a

Fig. 8

Fig. 9a

Fig. 9b

Fig. 10a

Fig. 10b

Fig. 11a

A

28

B

B

A

Fig. 11b

1

2b    2a

35

33b

33a

33b

33a

34    1

Fig. 11c

2a    33a

1

33a

1

33b    33b    2b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008083417 A1
- AT 40052
- US 1114691 A